# EUROPÄISCHE PATENTSCHRIFT

(11) **EP 0 560 108 B1**
(45) Veröffentlichungstag und Bekanntmachung des Hinweises auf die Patenterteilung: **09.10.1996**
(21) Anmeldenummer: 93102755.1
(22) Anmeldetag: 22.02.1993
(51) Int. Cl.: H02P 9/08, H02P 1/30, H02J 3/34

(54) **Verfahren und Hochlaufeinrichtung zum Hochfahren einer Asynchronmaschine**
Method and run-up device for starting an asynchronous machine
Procédé et dispositif d'accélération pour mettre en route une machine asynchrone

(30) Priorität: 07.03.1992 DE 4207327
(43) Veröffentlichungstag der Anmeldung: 15.09.1993
(73) Patentinhaber: ASEA BROWN BOVERI AG, CH-5401 Baden (CH)
(72) Erfinder: Schäfer, René, CH-5034 Suhr (CH)
(74) Vertreter: Rzehak, Herbert

(56) Entgegenhaltungen:
- EP-A- 0 203 436
- US-A- 4 481 455
- PATENT ABSTRACTS OF JAPAN vol. 6, no. 215 (E-138)28. Oktober 1982 & JP-A-57 119 671 (TOKYO SHIBAURI DENKI KK) 26. Juli 1982

## Beschreibung

### TECHNISCHES GEBIET

Bei der Erfindung wird ausgegangen von einem Verfahren zum Hochfahren einer Asynchronmaschine nach dem Oberbegriff des Patentanspruchs 1. Die Erfindung betrifft auch eine Hochlaufeinrichtung zum Hochfahren einer Asynchronmaschine nach dem Oberbegriff des Patentanspruchs 3.

### STAND DER TECHNIK

Mit dem Oberbegriff der Patentansprüche 1 und 3 nimmt die Erfindung auf einen Stand der Technik Bezug, wie er aus der US-A-4,481,455 bekannt ist. Dort wird für die Statoranspeisung einer Asynchronmaschine während des Anlaufvorganges eine eigene Transformatorwicklung mit reduzierter Spannung verwendet.

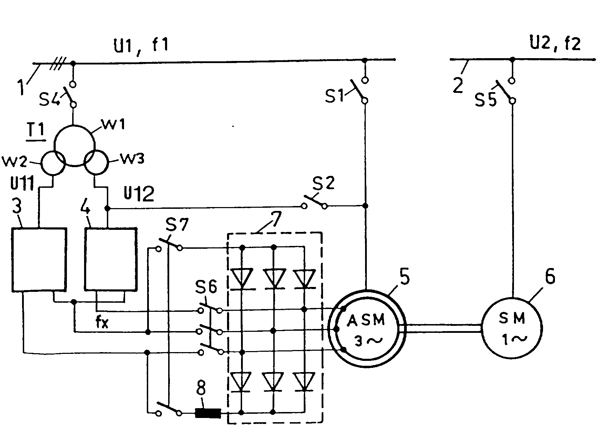

Durch W. L. Bruggisser und R. Schäfer: Neues Hochlaufverfahren für Netzkupplungsumformer für Bahnnetze, Elektrische Bahnen eb, 85. Jg., Heft 4, 1987, S. 118 - 123 ist, insbesondere in Verbindung mit Bild 3, ein Hochlaufverfahren für eine 3phasige Asynchronmaschine, die mit einer Einphasen-Synchronmaschine gekoppelt ist, bekannt. Das Hochfahren erfolgt mittels eines Anlasswiderstandes und eines Anlasstransformators in 4 Anfahrstufen, wobei die Statorspannung der Asynchronmaschine über den Anlasstransformator in einer 1. Anfahrstufe auf z. B. 40 % der Netzspannung reduziert und der Strom in einer 2. und 3. Anfahrstufe durch den Rotoranlasswiderstand gesteuert wird. Für dieses Verfahren sind ausser einem Anlasstransformator und einem Anlasswiderstand viele Schalter und Trenner erforderlich. Beim Ein- und Umschalten kann es zu transienten Netzvorgängen und damit zu Überspannungen im Schleifringraum der Asynchronmaschine kommen.

Aus der EP-A2-0 184 653 ist es bekannt in einem rotierenden Frequenzumformer für die Übertragung elektrischer Energie eine Asynchronmaschine zum Hochfahren einer Synchronmaschine von 0 Hz bis zur Solldrehzahl in 3 Stufen mittels eines Direktumrichters zu verwenden. Zunächst wird der Direktumrichter mit den Rotorwicklungen der Asynchronmaschine verbunden, während deren Statorwicklungen kurzgeschlossen sind. Die einstellbare Frequenz des Direktumrichters wird von 0 Hz auf über 20 Hz erhöht. Infolge der starren Kupplung des Rotors der Asynchronmaschine mit dem Rotor der Synchronmaschine erhöht sich deren Statorfrequenz auf ca. 40 % der Nenndrehzahl. Dann wird der Direktumrichter auf Speisung der Statorwicklung der gleichstromerregten Synchronmaschine umgeschaltet und die Frequenz am Ausgang des Direktumrichters so vorgegeben, dass sich die Drehzahl von ca. 40 % auf ca. 104 % der Nenndrehzahl erhöht. Danach wird der Direktumrichter wieder auf die Rotorwicklung der Asynchronmaschine umgeschaltet, diese im Auslauf mit dem Landesnetz synchronisiert und mittels eines Schalters an dieses angeschlossen. Danach wird mittels Schlupfregelung über die Asynchronmaschine die Synchronmaschine synchronisiert und an das Bahnnetz angeschlossen.

Beim Hochlauf über die 1Phasen-Synchronmaschine entstehen physikalisch bedingte frequenzvariable Leistungspulsationen bzw. Oberschwingungsdrehmomente mit der 2fachen Statorfrequenz der Synchronmaschine. Pulsationen, insbesondere im Bereich von 15 Hz - 30 Hz, können zu einer vorzeitigen Alterung mechanischer Komponenten, wie Polverbindungen, Ventilatoren usw. führen.

### DARSTELLUNG DER ERFINDUNG

Die Erfindung, wie sie in den Patentansprüchen 1 und 3 definiert ist, löst die Aufgabe, ein Verfahren und eine Hochlaufeinrichtung zum Hochfahren einer Asynchronmaschine der eingangs genannten Art derart weiterzuentwickeln, dass unerwünschte mechanische Schwingungen beim Hochlaufen reduziert werden.

Ein Vorteil der Erfindung besteht darin, dass die Lebensdauer schwingungsanfälliger mechanischer Komponenten erhöht wird.

Ein weiterer Vorteil besteht darin, dass beim Anfahren im Rotor der Asynchronmaschine keine hohen Spannungen auftreten.

### KURZE BESCHREIBUNG DER ZEICHNUNGEN

Die Erfindung wird nachstehend anhand eines Ausführungsbeispiels erläutert. Die einzige Figur zeigt eine Schaltung zum Hochfahren eines rotierenden Frequenzumformers mit Schaltern zwischen Direktumrichter und Rotor der Asynchronmaschine.

### WEG ZUR AUSFÜHRUNG DER ERFINDUNG

In der einzigen Figur ist mit (1) ein 3phasiges Wechselstromnetz bzw. ein Drehstromnetz mit einer Wechselspannung (U1) von 12,5 kV und einer Netzfrequenz (f1) von 50 Hz bezeichnet und mit (2) ein lphasiges Wechselstromnetz bzw. Bahnnetz mit einer Wechselspannung (U2) von 12 kV und einer Netzfrequenz (f2) von 16 2/3 Hz. Das Wechselstromnetz (1) ist über einen Schalter (S1) mit den Statorwicklungen einer 3Phasen-Schleifringläufer-Asynchronmaschine bzw. Asynchronmaschine (5) verbunden. Die Rotorwicklungen der Asynchronmaschine (5) stehen mit einem Frequenzausgang eines Stromrichters bzw. Direktumrichters (3, 4) in V-Schaltung in Verbindung, an dem eine einstellbare Frequenz (fx) abgreifbar ist. Der Direktumrichter (4) ist gleich aufgebaut wie der Direktumrichter (3). Jeder der beiden Direktumrichter (3, 4) ist eingangsseitig 3phasig an Sekundärwicklungen (W2) bzw. (W3) eines Stromrichtertransformators (T1) angeschlossen, dessen Primärwicklung (W1) über einen Schalter (S4) an das Wechselstromnetz (1) anschliessbar ist. An den Sekundärwicklungen (W2, W3) sind gegenüber der Wechselspannung (U1) reduzierte stromrichterseitige Wechselspannungen (U11, U12) abgreifbar. Die Sekundärwicklung (W3) des Stromrichtertransformators (T1) ist über einen Schalter (S2) an die Statorwicklungen der Asynchronmaschine (5) anschliessbar.

Der Rotor der Asynchronmaschine (5) ist über eine Kupplungswelle mit dem Rotor einer Synchronmaschine bzw. Einphasen-Synchronmaschine (6) starr gekuppelt. Die Statorwicklung der Synchronmaschine (6) ist über einen Schalter (S5) mit dem Bahnnetz (2) verbindbar.

Die Nenndrehzahl der Asynchronmaschine (5) beträgt 500 U/min bei 50 Hz bzw. 600 U/min bei 60 Hz (U = Umdrehungen). Die nachfolgenden Angaben gelten für eine Netzfrequenz (fl) von 50 Hz.

Der Ausgang des Direktumrichters (3, 4) ist über einen Schalter (S6) mit den Rotorwicklungen der Asynchronmaschine (5) verbunden. 2 Phasenausgänge des Direktumrichters (3) sind über einen weiteren Schalter (S7) und einen dazu in Reihe geschalteten Diodengleichrichter bzw. Gleichrichter (7) mit den Rotorwicklungen der Asynchronmaschine (5) verbunden. In eine der beiden Zuleitungen zwischen dem Schalter (S7) und dem Gleichrichter (7) ist eine Drossel (8) geschaltet.

Der Hochlauf der Asynchronmaschine (5) erfolgt hierbei in 3 Stufen.

### 1. Stufe:

Die Schalter (S2), (S4) und (S7) sind geschlossen, die Schalter (S1), (S5) und (S6) offen. Dabei wird der Stator der Asynchronmaschine (5) über den Stromrichtertransformator (T1) mit reduzierter Spannung gespeist und der im Rotor induzierte Wechselstrom über den Gleichrichter (7) gleichgerichtet und durch die Drossel (8) geglättet. Der Umrichter (3) wirkt in dieser Schaltung als Wechselrichter und speist die Rotorenergie ins Wechselstromnetz (1) zurück. Die Asynchronmaschine (5) wird dabei durch das entstehende Drehmoment von 0 U/min auf ca. 490 U/min, entsprechend ca. 98 % der Nenndrehzahl, hochgefahren. Der Umrichter (4) ist dabei abgeschaltet.

### 2. Stufe:

Bei maximal erreichbarer Drehzahl von ca. 490 U/min wird der Umrichter (3) abgeschaltet. Im nun folgenden reibungsbedingten Auslauf der Asynchronmaschine (5) werden die Schalter (S2) und (S7) geöffnet und danach der Schalter (S6) geschlossen. Danach erfolgt die Erregung der Asynchronmaschine (5) über den Direktumrichter (3, 4) so, dass die Wechselspannung am Ausgang der Statorwicklungen der Asynchronmaschine (5) nach Frequenz, Phasenlage und Betrag gleich der Wechselspannung (U1) des Wechselstromnetzes (1) wird - im Drehzahlbereich von ca. 490 U/min ... 480 U/min. Dann wird der Schalter (S1) geschlossen.

### 3. Stufe:

Es erfolgt eine Drehzahlregelung über die Asynchronmaschine (5) und die unter-/übersynchrone Kaskade sowie ein Synchronisieren der Synchronmaschine (6) im Bereich von 480 U/min ... 520 U/min. Im geeigneten Moment wird der Schalter (S5) phasensynchron geschlossen.

### 4. Stufe:

Normalbetrieb des rotierenden Frequenzumformers mit Leistungsübertragung vom 50-Hz-Wechselstromnetz (1) zum 16 2/3-Hz-Bahnnetz (2) oder umgekehrt.

Frequenzumformergruppen werden hauptsächlich für die Übertragung elektrischer Energie im Bereich von 8 MW - 90 MW von einem Landesnetz mit einer Frequenz von 50 Hz oder 60 Hz in ein Einphasen-Bahnnetz (2) mit einer anderen Frequenz von üblicherweise 16 2/3 Hz oder 25 Hz verwendet.

Anstelle der 1Phasen-Synchronmaschine (6) kann selbstverständlich eine Mehrphasen-Synchronmaschine vorgesehen werden, wenn das Wechselstromnetz (2) mehrphasig ist. Es können anstelle der Synchronmaschine (6) auch andere Maschinen, wie Förderbänder, Lüfter usw., vorgesehen sein, die nicht unter Last anfahren müssen.

Anstelle eines Direktumrichters (3, 4) in V-Schaltung kann auch ein anderer Stromrichtertyp verwendet werden.

Der Schalter (S2) kann statt an die Sekundärwicklung (W3) auch an die Sekundärwicklung (W2) des Stromrichtertransformators (T1) angeschlossen werden.

### BEZEICHNUNGSLISTE

- 1: Wechselstromnetz, Landesnetz
- 2: Wechselstromnetz, Einphasen-Bahnnetz
- 3, 4: Stromrichter, Direktumrichter
- 5: Asynchronmaschine, 3Phasen-Schleifringläufer-Asynchronmaschine
- 6: Synchronmaschine, 1Phasen-Synchronmaschine
- 7: Gleichrichter
- 8: Drossel
- f1, f2: Netzfrequenz von 1 bzw. 2
- fx: einstellbare Frequenz von 3, 4
- S1 - S7: Schalter
- T1: Stromrichtertransformator
- U1, U2: Wechselspannungen von 1 bzw. 2
- U11, U12: stromrichterseitige Wechselspannungen von T1
- W1: Primärwicklung von T1
- W2, W3: Sekundärwicklungen von T1
- W3: Spannungsquelle mit gegenüber U1 reduzierter Wechselspannung U12

## Patentansprüche

1. Verfahren zum Hochfahren einer Asynchronmaschine (5) mit einer statischen unter-/übersysnchronen
Stromrichterkaskade,
a) wobei die Asynchronmaschine (5) rotorseitig mit mindestens einem Stromrichter (3, 4) in Wirkverbindung steht und
b) statorseitig mit einem Wechselstromnetz (1) mit einer Netzfrequenz (f1) bei Erreichen einer Drehzahl entsprechend dieser Netzfrequenz in Wirkverbindung gebracht wird,
c) wobei mindestens während eines Zeitabschnittes des Hochfahrens der Stator der Asynchronmaschine (5) an eine Wechselspannungsquelle (W3) angeschlossen wird, deren Wechselspannung (U12) bezüglich der Wechselspannung (U1) des Wechselstromnetz (1) reduziert ist,
dadurch gekennzeichnet,
d) dass während des Hochlaufvorganges der Wechselstrom des Rotors der Asynchronmaschine gleichgerichtet und über einen Gleichstromzwischenkreis dem mindestens einen Stromrichter (3, 4) zugeführt wird.

2. Verfahren nach Anspruch 1, dadurch gekennzeichnet,
a) dass bei einer maximal erreichbaren Drehzahl der Asynchronmaschine (5) die elektrische Verbindung zwischen dem Stator der Asynchronmaschine (5) und der Wechselspannungsquelle (W3) mit der reduzierten Wechselspannung (U12) getrennt wird,
b) dass dann bei offenen Statorwicklungen der Asynchronmaschine (5) der mindestens eine Stromrichter (3, 4) von einem mit dem Rotor der Asynchronmaschine (5) in Wirkverbindung stehenden Gleichrichter (7) getrennt und als Direktumrichter (3, 4) an den Rotor der Asynchronmaschine (5) angeschlossen wird und
c) dass bei Erreichen einer Synchronisation von Statorspannung und Wechselspannung (U1) der Stator der Asynchronmaschine (5) an das Wechselstromnetz (1) angeschlossen wird.

3. Hochlaufeinrichtung zum Hochfahren einer Asynchronmaschine (5) mit einer statischen unter-/übersynchronen Stromrichterkaskade
a) mit einer Asynchronmaschine (5),
b) deren Statorwicklungen über einen 1. Schalter (S1) mit einem Wechselstromnetz (1) mit einer Netzfrequenz (f1) in Wirkverbindung bringbar ist und
c) deren Rotorwicklungen über mindestens einen Stromrichter (3, 4) mit Sekundärwicklungen (W2, W3) eines Stromrichtertransformators (T1) in Wirkverbindung stehen,
d) wobei der Stator der Asynchronmaschine (5) über einen 2. Schalter (S2) mit einer Wechselspannungsquelle (W3) in elektrischer Verbindung steht, deren Wechselspannung (U12) bezüglich der Wechselspannung (U1) des Wechselstromnetz (1) reduziert ist,
e) wobei die Wechselspannungsquelle (W3) mit einer reduzierten Wechselspannung (U12) eine Sekundärwicklung (W3) des Stromrichtertransformators (T1) ist,
dadurch gekennzeichnet,
f) dass ein Stromrichter (3) über eine Reihenschaltung eines 3. Schalters (S7) und eines Gleichrichters (7) mit dem Rotor der Asynchronmaschine (5) in Wirkverbindung steht und
g) dass der mindestens eine Stromrichter (3, 4) über einen 4. Schalter (S6) mit dem Rotor der Asynchronmaschine (5) in Wirkverbindung steht.

4. Hochlaufeinrichtung nach Anspruch 3, dadurch gekennzeichnet, dass der mindestens eine Stromrichter (3, 4) ein Direktumrichter in V-Schaltung ist.

5. Hochlaufeinrichtung nach Anspruch 3 oder 4, dadurch gekennzeichnet, dass die über den 2. Schalter (S2) mit dem Stator der Asynchronmaschine (5) in elektrischer Verbindung stehende Sekundärwicklung (W3) des Stromrichtertransformators (T1) gleichzeitig mit einem Stromrichter (4) in elektrischer Verbindung steht.

## Claims

1. Method of accelerating an asynchronous machine (5) having a solid-state undersynchronous/oversynchronous converter cascade,
a) the asynchronous machine (5) being operatively connected on the rotor side to at least one converter (3, 4), and
b) being operatively connected on the stator side to an AC mains power supply (1) at a mains power supply frequency (fl) on reaching a rotation speed corresponding to this mains power supply frequency,
c) the stator of the asynchronous machine (5) being connected to an AC voltage source (W3) at least during part of the time of the acceleration, the AC voltage (U12) of which AC voltage source (W3) is less than the AC voltage (U1) of the AC mains power supply (1),
characterized
d) in that the alternating current of the rotor of the asynchronous machine is rectified during the acceleration process and is supplied via a DC intermediate circuit to the one or more than one converter (3, 4).

2. Method according to Claim 1, characterized
a) in that the electrical connection between the stator of the asynchronous machine (5) and the AC voltage source (W3) having the reduced AC voltage (U12) is broken when the asynchronous machine (5) is at a maximum achievable rotation speed,
b) in that the one or more than one converter (3, 4) is then isolated from a rectifier (7), which is operatively connected to the rotor of the asynchronous machine (5), with the stator windings of the asynchronous machine (5) open, and is connected to the rotor of the asynchronous machine (5) as a direct converter (3, 4), and
c) in that the stator of the asynchronous machine (5) is connected to the AC mains power supply (1) on reaching synchronization between the stator voltage and the AC voltage (U1).

3. Acceleration device for accelerating an asynchronous machine (5) having a solid-state undersynchronous/oversynchronous converter cascade
a) having an asynchronous machine (5),
b) whose stator windings can be operatively connected via a 1st switch (S1) to an AC mains power supply (1) at a mains power supply frequency (f1), and
c) whose rotor windings are operatively connected via at least one converter (3, 4) to secondary windings (W2, W3) of a converter transformer (T1),
d) the stator of the asynchronous machine (5) being electrically connected via a 2nd switch (S2) to an AC voltage source (W3) whose AC voltage (U12) is less than the AC voltage (U1) of the AC mains power supply (1),
e) the AC voltage source (W3) having a reduced AC voltage (U12) being a secondary winding (W3) of the converter transformer (T1),
characterized
f) in that a converter (3) is operatively connected to the rotor of the asynchronous machine (5) via a series circuit formed by a 3rd switch (S7) and a rectifier (7), and
g) in that the one or more than one converter (3, 4) is operatively connected via a 4th switch (S6) to the rotor of the asynchronous machine (5).

4. Acceleration device according to Claim 3, characterized in that the one or more than one converter (3, 4) is a direct converter in a V-circuit.

5. Acceleration device according to Claim 3 or 4, characterized in that the secondary winding (W3) of the converter transformer (T1) is electrically connected via the 2nd switch (S2) to the stator of the asynchronous machine (5) and is at the same time electrically connected to a converter (4).

## Revendications

1. Procédé pour mettre en route une machine asynchrone (5) au moyen d'une cascade de convertisseurs statiques de courant sous-/sur-synchrones,
a) la machine asynchrone (5) étant en liaison active du côté du rotor avec au moins un convertisseur de courant (3, 4) et
b) étant amenée du côté du stator en liaison active avec un réseau électrique alternatif (1) de fréquence (f1) lorsque qu'elle atteint une vitesse de rotation correspondant à cette fréquence du réseau,
c) le stator de la machine asynchrone (5) étant raccordé, pendant au moins un intervalle de temps de la mise en route, à une source de tension alternative (W3) dont la tension alternative (U12) est réduite par rapport à la tension alternative (U1) du réseau électrique alternatif (1),
caractérisé en ce que,
d) pendant la phase d'accélération, le courant alternatif du rotor de la machine asynchrone est redressé et amené au moyen d'un circuit intermédiaire à courant continu vers au moins un convertisseur de courant (3, 4).

2. Procédé selon la revendication 1 caractérisé en ce que
a) lorsque la machine asynchrone (5) atteint sa vitesse de rotation maximale, la liaison électrique entre le stator de la machine asynchrone (5) et la source de tension alternative (W3), dont la tension alternative (U12) est réduite, est interrompue,
b) ensuite, lorsque les bobinages du stator de la machine asynchrone (5) sont ouverts, au moins l'un des convertisseurs de courant (3, 4) est isolé d'un redresseur (7) en liaison active avec le rotor de la machine asynchrone (5) et est raccordé comme convertisseur statique de fréquence (3, 4) au rotor de la machine asynchrone (5) et
c) lorsque la synchronisation entre la tension du stator et la tension alternative (U1) est atteinte, le stator de la machine asynchrone (5) est raccordé au réseau de courant alternatif (1).

3. Dispositif d'accélération pour mettre en route une machine asynchrone (5) au moyen d'une cascade de convertisseurs statiques de courant sous-/sur-synchrones,
a) avec une machine asynchrone (5),
b) dont les bobinages du stator peuvent être mis en liaison active, au moyen d'un premier interrupteur (S1), avec un réseau électrique alternatif (1) de fréquence (f1) et
c) dont les bobinages du rotor peuvent être mis en liaison active avec les bobinages secondaires (W2, W3) d'un transformateur du convertisseur (T1) au moyen d'au moins un convertisseur (3, 4)
d) le stator de la machine asynchrone (5) étant raccordé électriquement, au moyen d'un second interrupteur (S2), à une source de tension alternative (W3) dont la tension alternative (U12) est réduite par rapport à la tension alternative (U1) du réseau électrique alternatif (1),
e) la source de tension alternative (W3) avec une tension alternative réduite (U12) étant un bobinage secondaire (W3) du transformateur du convertisseur (T1),
caractérisé en ce que,
f) un convertisseur de courant (3) est en liaison active, au moyen du branchement en série d'un troisième interrupteur (S7) et d'un redresseur (7) avec le rotor de la machine asynchrone (5) et que
g) l'un au moins des convertisseurs de courant (3, 4) est en liaison active, au moyen d'un quatrième interrupteur (56) avec le rotor de la machine asynchrone (5).

4. Dispositif d'accélération selon la revendication 3, caractérisé en ce qu'un au moins des convertisseurs de courant (3, 4) est un convertisseur statique de fréquence à branchement en V.

5. Dispositif d'accélération selon la revendication 3 ou 4, caractérisé en ce qu'un bobinage secondaire (W3) du transformateur du convertisseur (T1), raccordé électriquement avec le stator de la machine asynchrone (5) au moyen d'un second interrupteur (S2), est simultanément raccordé électriquement avec un convertisseur de courant (4).
